(19) Europäisches Patentamt
European Patent Office
Office européen des brevets

(11) **EP 4 628 451 A1**

(12) **EUROPEAN PATENT APPLICATION**
published in accordance with Art. 153(4) EPC

(43) Date of publication:
**08.10.2025 Bulletin 2025/41**

(21) Application number: **23897905.8**

(22) Date of filing: **01.12.2023**

(51) International Patent Classification (IPC):
**C01G 53/00** $^{(2025.01)}$ **H01M 4/505** $^{(2010.01)}$
**H01M 4/525** $^{(2010.01)}$

(52) Cooperative Patent Classification (CPC):
**C01G 53/00; H01M 4/505; H01M 4/525;**
**Y02E 60/10**

(86) International application number:
**PCT/JP2023/043152**

(87) International publication number:
**WO 2024/117259 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2022 JP 2022193520**

(71) Applicant: **Sumitomo Chemical Company, Limited**
**Tokyo 103-6020 (JP)**

(72) Inventors:
- **IWASAKI Kentaro**
  **Niihama-shi, Ehime 792-8521 (JP)**
- **YAMAMOTO ARAI Nana**
  **Niihama-shi, Ehime 792-8521 (JP)**

(74) Representative: **Vossius & Partner**
**Patentanwälte Rechtsanwälte mbB**
**Siebertstrasse 3**
**81675 München (DE)**

(54) **LITHIUM METAL COMPOSITE OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57) The present invention relates to a lithium metal composite oxide comprising a plurality of secondary particles which are aggregates of primary particles, wherein: at least a part of the secondary particles have voids therein; with respect to outline shape of the voids exposed in cross-sections of the secondary particles having voids therein, an area-weighted average aspect ratio of the voids with an equivalent circle diameter of 0.2 $\mu$m or more is 1.8 or more and 5.0 or less; and a ratio of number of the secondary particles having the voids with an equivalent circle diameter of 0.5 $\mu$m or more to total number of the secondary particles is 3 % or more and 95 % or less.

FIG. 1

**Description**

TECHNICAL FIELD

The present invention relates to a lithium metal composite oxide, a cathode active material for a lithium secondary battery, a cathode for a lithium secondary battery, and a lithium secondary battery.
Priority is claimed on Japanese Patent Application No. 2022-193520, filed December 2, 2022, the contents of which are incorporated herein by reference.

BACKGROUND ART

Lithium metal composite oxides are used as cathode active materials for lithium secondary batteries. For the purpose of improving the performance of lithium secondary batteries, the composition, physical properties, pore structure, etc. of lithium metal composite oxides have been investigated.
For example, Patent Document 1 reports the results of a study focusing on the pore structure of lithium metal composite oxides. Specifically, a cathode active material is disclosed that includes secondary particles having a shell portion formed of primary particles and a hollow portion formed inside the shell portion, and the shell portion has through holes that connect the outside of the shell portion to the hollow portion of the shell portion. It is disclosed that the output of a lithium secondary battery is improved by setting the diameter of the through holes and the pore distribution of the through holes within specific ranges.

Citation List

Patent Document

Patent Document 1: Japanese Unexamined Patent Application Publication No. 2017-004635

SUMMARY OF INVENTION

Technical Problem

Amid the ongoing development of the application of lithium secondary batteries, there is a demand for lithium secondary batteries to improve further in terms of initial discharge capacity and rate performance.
The present invention has been made in consideration of the above circumstances, and aims to provide a lithium metal composite oxide that can provide a lithium secondary battery with high initial discharge capacity and high rate performance, a cathode active material for lithium secondary batteries that contains the lithium metal composite oxide, and a cathode for lithium secondary batteries and a lithium secondary battery that contain the cathode active material for lithium secondary batteries.

Solution to Problem

The present invention is as described in [1] to [12] below.

[1] A lithium metal composite oxide comprising a plurality of secondary particles which are aggregates of primary particles, wherein: at least a part of the secondary particles have voids therein; with respect to outline shape of the voids exposed in cross-sections of the secondary particles having voids therein, an area-weighted average aspect ratio of the voids with an equivalent circle diameter of 0.2 $\mu$m or more is 1.8 or more and 5.0 or less; and a ratio of number of the secondary particles having the voids with an equivalent circle diameter of 0.5 $\mu$m or more to total number of the secondary particles is 3 % or more and 95 % or less.
[2] The lithium metal composite oxide according to [1], wherein an average value of equivalent circle diameters of the voids with an equivalent circle diameter of 0.2 $\mu$m or more is 0.3 $\mu$m or more.
[3] The lithium metal composite oxide according to [1] or [2], wherein an area-weighted average major axis of the voids with an equivalent circle diameter of 0.2 $\mu$m or more is 0.2 $\mu$m or more and 15 $\mu$m or less.
[4] The lithium metal composite oxide according to any one of [1] to [3], wherein the area-weighted average aspect ratio of the voids with an equivalent circle diameter of 0.2 $\mu$m or more is 1.0 or more and 5.0 or less.
[5] The lithium metal composite oxide according to any one of [1] to [4], wherein a ratio of an area-weighted average major axis of the voids with an equivalent circle diameter of 0.2 $\mu$m or more to an area-weighted average major axis of the secondary particles having the voids with an equivalent circle diameter of 0.2 $\mu$m or more is 0.001 or more and 0.9 or less.

[6] The lithium metal composite oxide according to any one of [1] to [5], which has a volume-based 50% cumulative particle size $D_{50}$ of 5 $\mu$m or more and 20 $\mu$m or less.

[7] The lithium metal composite oxide according to any one of [1] to [6], which comprises Li and Ni, and optionally comprises at least one element selected from the group consisting of Co and Mn, wherein a molar percentage of Co relative to a total molar number of elements other than Li and oxygen contained in the lithium metal composite oxide is 5 % or less.

[8] The lithium metal composite oxide according to any one of [1] to [7], which is represented by composition formula (1) below:

$$Li[Li_x(Ni_{(1-y-z)}M1_yM2_z)_{1-x}]O_2 \qquad (I),$$

wherein M1 represents at least one element selected from the group consisting of Co, Mn, and Al; M2 represents at least one element selected from the group consisting of Fe, Cu, Ti, Mg, W, Mo, Nb, Zn, Sn, Zr, Ga, B, Si, S, and P; and the composition formula (I) satisfies $-0.1 \leq x \leq 0.2$, $0 < y < 1$, $0 \leq z \leq 0.2$, and $y + z < 1$.

[9] The lithium metal composite oxide according to any one of [1] to [8], wherein, in a powder X-ray diffraction measurement using CuK$\alpha$ radiation, $I_D/I_E$ is 0.8 or more, wherein ID is a peak area of a diffraction peak present in a range of 2$\theta$ = 18.5 $\pm$ 1°, and $I_E$ is a peak area of a diffraction peak present in a range of 2$\theta$ = 44.5 $\pm$ 1°.

[10] A lithium secondary battery cathode active material, comprising the lithium metal composite oxide of any one of [1] to [9].

[11] A lithium secondary battery cathode, comprising the lithium secondary battery cathode active material of [10].

[12] A lithium secondary battery, comprising the lithium secondary battery cathode of [11].

Advantageous Effects of Invention

The present invention can provide a lithium metal composite oxide that enables production of a lithium secondary battery with high initial discharge capacity and high rate performance, a cathode active material for lithium secondary batteries that contains the lithium metal composite oxide, and a cathode for lithium secondary batteries and a lithium secondary battery that contain the cathode active material for lithium secondary batteries.

BRIEF DESCRIPTION OF DRAWINGS

[FIG. 1] A schematic diagram of a binarized cross-sectional image of secondary particles contained in a lithium metal composite oxide.

[FIG. 2] A schematic configuration diagram showing an example of a lithium secondary battery.

[FIG. 3] A schematic diagram showing an example of an all-solid-state lithium secondary battery.

DESCRIPTION OF EMBODIMENTS

The definitions of terms used in the present specification are as follows.

A metal composite compound is hereinafter also referred to as "MCC".

A lithium metal composite oxide is hereinafter also referred to as "LiMO".

A cathode active material for lithium secondary batteries is hereinafter also referred to as "CAM".

"Ni" indicates the element nickel, rather than nickel as a pure metal. The same applies to other elements such as Co and Mn.

The term "primary particle" refers to a particle that does not appear to have grain boundaries when observed at 10,000 times magnification using a scanning electron microscope (hereinafter also referred to as "SEM") or the like.

The terms "secondary particle" refers to a particle formed by aggregation of primary particles. In other words, secondary particles are aggregates of primary particles.

With regard to numerical ranges, for example, when a numerical range is described as "5.00 to 15.00 $\mu$m," it means a range from 5.00 $\mu$m to 15.00 $\mu$m, including the lower limit value of 5.00 $\mu$m and the upper limit value of 15.00 $\mu$m.

In the present specification, the upper and lower limit values of the numerical ranges can be combined in any manner. The numerical ranges for the physical properties, compositions, and production conditions can be combined in any manner.

The equivalent circle diameter means the length expressed as $(4 \times S/\pi)^{1/2}$, wherein S is the area of the target cross-section.

A lithium secondary battery means a lithium ion secondary battery.

The measurement methods for various parameters of LiMO in the present specification are as follows.

<Area-weighted average aspect ratio of voids, etc.>

- Acquisition of cross-sectional image of secondary particles contained in LiMO

LiMO is processed to obtain a cross-section of LiMO. One example of a method for obtaining a cross-section of LiMO is to process LiMO with a focused ion beam device. Alternatively, a part of a cathode made using LiMO as CAM may be cut out and processed with an ion milling device to obtain a cross-section of LiMO contained in the cathode active material layer of the cathode.

The sample to be processed for obtaining a cross-section is not limited to LiMO or a cathode, but LiMO solidified with a resin may also be used as appropriate. Further, the method for preparing the cross-section is not limited to the ion beam method, but polishing, etc. may also be used as appropriate.

Using SEM, the cross-section of the LiMO obtained by the above processing is observed with a backscattered electron image to obtain a cross-sectional image of the secondary particles. The measurement conditions can be, for example, an acceleration voltage of 5 kV, and image resolution of x, y = 0.023 $\mu$m, z = 0.023 $\mu$m. The magnification may be such that 10 or more secondary particles can be recognized in one field of view.

- Binarization of the cross-sectional image of the secondary particles contained in LiMO

The cross-sectional image of the secondary particles contained in LiMO is imported into a computer, and binarization is performed using an image analysis software with an intermediate value between the maximum brightness and the minimum brightness in the cross-sectional image of the secondary particles, to obtain a binarized image in which the solid cross-section of the secondary particle is converted to a predetermined color (e.g., gray) and the voids exposed in the solid cross-section of the secondary particle (hereinafter referred to as void cross-sections) are converted to another predetermined color (e.g., white). As the image analysis software, for example, quantitative analysis software (TRI/3D-BON-FCS, produced by Ratoc System Engineering Co., Ltd.) can be used. This quantitative analysis software allows an image to be binarized using Auto-LW, a function of the software. In this process, the cross-sectional image before binarization is visually examined, and the cross-sectional images before and after binarization are compared to confirm that there is no discrepancy with respect to the solid cross-section and void cross-section of the secondary particle. If a discrepancy is found, the threshold value for binarization is adjusted. Further, when LiMO contains Al, Al segregation may occur in the solid cross-section and void cross-section of the secondary particle, resulting in intermediate contrast. In such a case, an image calculation function is used to extract only the intermediate contrast portion, which is then superimposed on the void cross-section. This process enables binarization to be performed free from the effects of Al segregation, while more accurately identifying the solid cross-section and void cross-section of the secondary particle.

In the image obtained by binarization, an image calculation function is used to exclude secondary particles with an equivalent circle diameter of 6.0 $\mu$m or less. Further, secondary particles that are present at the edge of the image and are only partially visible, secondary particles that are broken during binarization, and secondary particles with unclear particle shapes are excluded to obtain a "binarized image". In other words, the secondary particles used in the calculation of the parameters described below in the present specification are only secondary particles with an equivalent circle diameter of more than 6.0 $\mu$m.

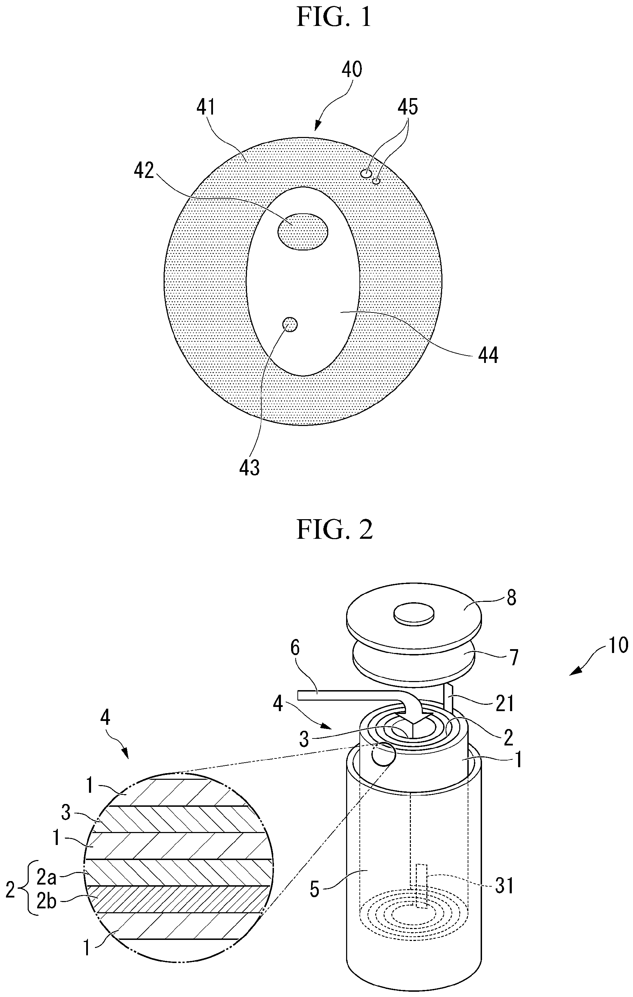

FIG. 1 is a schematic diagram of a binarized image of secondary particles contained in LiMO. The cross-section 40 of the secondary particle in FIG. 1 has a solid cross-section 41 of the secondary particle, a solid cross-section 42 of the secondary particle, a solid cross-section 43 of the secondary particle, a void cross-section 44, and a void cross-section 45. The void cross-section 44 is a void cross-section having an equivalent circle diameter of 0.2 $\mu$m or more, and the void cross-section 45 is a void cross-section having an equivalent circle diameter of less than 0.2 $\mu$m. When determining the equivalent circle diameter of the secondary particle in FIG. 1, the equivalent circle diameter is determined from the total area of the solid cross-section 41 of the secondary particle, the solid cross-section 42 of the secondary particle, the solid cross-section 43 of the secondary particle, the void cross-section 44, and the void cross-section 45.

Since the void cross-sections extracted from the binarized image also include extremely small voids between primary particles, only void cross-sections with an equivalent circle diameter of 0.2 $\mu$m or more (i.e., an area of 0.03 $\mu$m$^2$ or more) are extracted, and the aspect ratio, etc. is calculated for these void cross-sections. Hereinafter, a void cross-section with an equivalent circle diameter of 0.2 $\mu$m or more is referred to as "void cross-section A". Similarly, a void cross-section with an equivalent circle diameter of 0.5 $\mu$m or more is referred to as "void cross-section B". When calculating the equivalent circle diameter of the void cross-section 44 or the void cross-section 45, the equivalent circle diameter is calculated from the area of the void cross-section 44 or the void cross-section 45. That is, when determining the equivalent circle diameter of the void cross-section 44 or the void cross-section 45, the areas of the solid cross-section 41 of the secondary particle, solid cross-section 42 of the secondary particle, and solid cross-section 43 of the secondary particle are not taken into consideration.

Further, hereinafter, a void with an equivalent circle diameter of 0.2 μm or more is referred to as "void A," and a secondary particle having the void A therein is referred to as "secondary particle A". Similarly, a void with an equivalent circle diameter of 0.5 μm or more is referred to as "void B," and a secondary particle having the void B therein is referred to as "secondary particle B".

(Area-weighted average aspect ratio of voids A)

Based on the contour shape in the binarized image of the void cross-section A, the aspect ratio of the void A can be obtained by dividing the major axis of the void cross-section A by the minor axis of the void cross-section A. In this context, the "major axis" refers to the length of the major axis of the circle with the longest diameter among the diameters of the circle circumscribing the void cross-section A (meaning that the "major axis" is a diameter if the circle is a perfect circle, and is a double length of the major radius if the circle is an ellipse), and the "minor axis" refers to the length of the diameter that is perpendicular to the major axis and has the shortest diameter among the diameters of the circle (meaning that the "minor axis" is a diameter if the circle is a perfect circle, and is a double length of the minor radius if the circle is an ellipse).

For the contour shapes of all void cross-sections A recognized in the binarized image, the aspect ratio and area of each void cross-section A are measured, and the product of the aspect ratio and the area is calculated for all void cross-sections A. The "area-weighted average aspect ratio of the voids A" can be obtained by dividing the sum of the product of the aspect ratio and the area of the void cross-sections A by the total area of all void cross-sections A. For example, if void cross-section A' and void cross-section A" are present in the binarized image, the calculation is performed by the following formula A.

Area-weighted average aspect ratio of voids A = (aspect ratio of void cross-section A' x area of void cross-section A' + aspect ratio of void cross-section A" x area of void cross-section A") / (area of void cross-section A' + area of void cross-section A")  (Formula A)

(Average value of equivalent circle diameters of voids A)

For the contour shapes of all void cross-sections A recognized in the binarized image, the product of the equivalent circle diameter and area of the void cross-section A is calculated for all void cross-sections A. The "average value of equivalent circle diameters of voids A" can be obtained by dividing the sum of the product of the equivalent circle diameter and the area of the void cross-sections A by the total area of all void cross-sections A. For example, if void cross-section A' and void cross-section A" are present in the binarized image, the calculation is performed by the following formula B.

Average value of equivalent circle diameters of voids A = (equivalent circle diameter of void cross-section A' x area of void cross-section A' + equivalent circle diameter of void cross-section A" x area of void cross-section A") / (area of void cross-section A' + area of void cross-section A")  (Formula B)

(Area-weighted average major axis and area-weighted average minor axis of voids A)

For the contour shapes of all void cross-sections A recognized in the binarized image, the major axis, minor axis and area of each void cross-section A are measured, and the product of the major axis and the area and the product of the minor axis and the area are calculated for all void cross-sections A. The "area-weighted average major axis of the voids A" can be obtained by dividing the sum of the product of the major axis and the area of the void cross-sections A by the total area of all void cross-sections A. The "area-weighted average minor axis of the voids A" can be obtained by dividing the sum of the product of the minor axis and the area of the void cross-sections A by the total area of all void cross-sections A. For example, if void cross-section A' and void cross-section A" are present in the binarized image, the calculation is performed by the following formulae C and D.

Area-weighted average major axis of voids A = (major axis of void cross-section A' x area of void cross-section A' + major axis of void cross-section A" x area of void cross-section A") / (area of void cross-section A' + area of void cross-section A")  (Formula C)

Area-weighted average minor axis of voids A = (minor axis of void cross-section A' x area of void cross-section A' + minor axis of void cross-section A" x area of void cross-section A") / (area of void cross-section A' + area of void cross-section A")    (Formula D)

(Average aspect ratio of voids B in one secondary particle)

When one secondary particle has only one void B, the aspect ratio of the void B in the void cross-section B is the "average aspect ratio of voids B in one secondary particle". When one secondary particle has two or more voids B, the "average aspect ratio of voids B in one secondary particle" can be calculated by measuring the aspect ratios of all voids B for the contour shape of the void cross-sections B contained in one secondary particle and dividing the sum of the aspect ratios by the total number of void cross-sections B contained in one secondary particle.

(Area-weighted average aspect ratio of secondary particles A)

All secondary particle cross-sections A (cross-sections of secondary particles A) having void cross-sections A recognized in the binarized image are extracted. With respect to the contour shape of the extracted secondary particle cross-section A, the aspect ratio of secondary particle A can be obtained by dividing the major axis of the secondary particle cross-section A by the minor axis of the secondary particle cross-section A. In this context, the "major axis" refers to the length of the major axis of the circle with the longest diameter among the diameters of the circle circumscribing the secondary particle cross-section A (meaning that the "major axis" is a diameter if the circle is a perfect circle, and is a double length of the major radius if the circle is an ellipse), and the "minor axis" refers to the length of the diameter that is perpendicular to the major axis and has the shortest diameter among the diameters of the circle (meaning that the "minor axis" is a diameter if the circle is a perfect circle, and is a double length of the minor radius if the circle is an ellipse).

For the contour shapes of all secondary particle cross-sections A extracted above, the aspect ratio of the secondary particle cross-section A is measured. Further, for all secondary particle cross-sections A, calculation of the product of the aspect ratio and area is performed. The "area-weighted average aspect ratio of secondary particles A" can be obtained by dividing the sum of the products of the aspect ratios and areas for the respective secondary particle cross-sections A by the total area of all secondary particle cross-sections A. For example, if void cross-section A' and void cross-section A" are extracted from the binarized image, the calculation is performed by the following formula E.

Area-weighted average aspect ratio of secondary particles A = (aspect ratio of secondary particle cross-section A' x area of secondary particle cross-section A' + aspect ratio of secondary particle cross-section A" x area of secondary particle cross-section A") / (area of secondary particle cross-section A' + area of secondary particle cross-section A")    (Formula E)

(Area-weighted average major axis and area-weighted average minor axis of secondary particles A)

For the contour shapes of all secondary particle cross-sections A extracted above, the major axis, minor axis and area of the secondary particle cross-section A is measured. Further, for all secondary particle cross-sections A, calculations of the product of the major axis and area and the product of the minor axis and area are performed. The "area-weighted average major axis of secondary particles A" can be obtained by dividing the sum of the products of the major axes and areas for the respective secondary particle cross-sections A by the total area of all secondary particle cross-sections A. The "area-weighted average minor axis of secondary particles A" can be obtained by dividing the sum of the products of the minor axes and areas for the respective secondary particle cross-sections A by the total area of all secondary particle cross-sections A. For example, if void cross-section A' and void cross-section A" are extracted from the binarized image, the calculations are performed by the following formula F and formula G.

Area-weighted average major axis of secondary particles A = (major axis of secondary particle cross-section A' x area of secondary particle cross-section A' + major axis of secondary particle cross-section A" x area of secondary particle cross-section A") / (area of secondary particle cross-section A' + area of secondary particle cross-section A")    (Formula F)

Area-weighted average minor axis of secondary particles A = (minor axis of secondary particle cross-section A' x area of secondary particle cross-section A' + minor axis of secondary particle cross-section A" x area of secondary particle cross-section A") / (area of secondary particle cross-section A' + area of secondary particle cross-section A")    (Formula G)

<$D_{50}$>

The volume-based 50% cumulative particle size of LiMO, $D_{50}$ (unit: $\mu$m), can be determined from the particle size distribution of LiMO measured by a laser diffraction scattering method. Specifically, 0.10 g of LiMO powder is added to 50 mL of 0.20 mass% sodium hexametaphosphate aqueous solution to obtain a dispersion of the powder. Next, the particle size distribution of the obtained dispersion is measured using a laser diffraction scattering particle size distribution measuring device (e.g., Microtrac MT3300EXII, manufactured by MicrotracBEL Corporation) to obtain a volume-based cumulative particle size distribution curve. In the obtained cumulative particle size distribution curve, the value of particle size at 50% cumulation from the smaller particle side is $D_{50}$.

<Composition>

The composition of LiMO in terms of its constituent elements can be measured by inductively coupled plasma emission spectrometry (ICP). For example, the quantities of the elements can be measured using an inductively coupled plasma emission spectrometer (e.g., SPS3000, manufactured by SII NanoTechnology Inc.) with respect to a solution of LiMO in hydrochloric acid.

<XRD pattern>

The XRD pattern of LiMO can be obtained by powder X-ray diffraction measurement using CuK$\alpha$ as the radiation source with a measurement range of the diffraction angle $2\theta$ set in a range of 10-90°. For example, an XRD pattern of LiMO can be obtained using an X-ray diffractometer (e.g., Ultima IV, manufactured by Rigaku Corporation). The obtained XRD pattern can be analyzed using analysis software (e.g., integrated powder X-ray analysis software PDXL2, produced by Rigaku Corporation).

<Initial discharge capacity and rate performance>

The evaluation methods for LiMO in the present specification are as follows. A lithium secondary battery is produced using LiMO as CAM, and the initial discharge capacity and rate performance are measured.

(Production of a cathode for a lithium secondary battery)

CAM, a conductive material (acetylene black), and a binder (PVdF) are added and kneaded to obtain a composition of CAM:conductive material:binder = 92:5:3 (mass ratio) to prepare a paste-like cathode mix. When preparing the cathode mix, N-methyl-2-pyrrolidone is used as an organic solvent.
The obtained cathode mix is applied to a 40 $\mu$m-thick Al foil which serves as a current collector, and is dried in a vacuum at 150°C for eight hours, thereby obtaining a cathode for a lithium secondary battery. The electrode area of the cathode for a lithium secondary battery is set to 1.65 cm$^2$.

(Production of lithium secondary battery)

The following operations are performed in a glove box with an argon atmosphere.
The lithium secondary battery cathode described above is placed on a bottom lid as a part for a coin-type battery R2032 (manufactured by Hohsen Corporation) with the aluminum foil surface facing downward, and a polyethylene porous film separator (thickness: 25 $\mu$m) is placed on the cathode. 300 $\mu$l of an electrolytic solution is injected thereinto. The electrolytic solution is prepared by dissolving LiPF$_6$ in a mixture of ethylene carbonate, dimethyl carbonate and ethyl methyl carbonate with a volume ratio of 30:35:35 such that the amount of LiPF$_6$ becomes 1 mol/L.
Next, metallic lithium as an anode is placed on the upper side of the separator, covered with an upper lid through a gasket, and swaged using a swaging machine to produce a lithium secondary battery.

(Initial discharge capacity)

The initial discharge capacity test is carried out using the prepared lithium secondary battery, and the initial discharge capacity is calculated.

- Initial discharge capacity test

A lithium secondary battery is left to stand at 25°C for 12 hours to allow the separator and cathode mix layer to be sufficiently impregnated with the electrolyte.

Next, at a test temperature of 25°C, constant current/constant voltage charge and constant current discharge are performed with the current setting for both charge and discharge being 0.20 CA. The maximum charge voltage is 4.30 V, and the minimum discharge voltage is 2.50 V. The charge time is 6 hours, and the discharge time is 5 hours. The discharge capacity is measured, and the obtained value is the "initial discharge capacity" (mAh/g).

(Rate performance)

A discharge rate test is carried out using the produced lithium secondary battery by the following method, and the discharge capacity is calculated. The obtained value is the "rate performance" (mAh/g).

- Discharge rate test

The rate performance is the discharge capacity when constant current discharge is performed under the following conditions:

Test temperature: 25°C.
Maximum charging voltage 4.3V, charging current 1.00 CA, constant current/constant voltage charging.
Minimum discharging voltage 2.5 V, discharging current 5.00 CA, constant current discharging.

<<Lithium metal composite oxide>>

LiMO is an aggregate of multiple particles. In other words, LiMO is in powder form. LiMO has multiple secondary particles that are aggregates of primary particles. LiMO may contain only secondary particles, or may be a mixture of primary and secondary particles.

At least a portion of the secondary particles have voids therein, and the area-weighted average aspect ratio of the voids A in the outline shape exposed in the cross-section of the secondary particles having voids therein is 1.8 to 5.0. The ratio of the number of the secondary particles B having the voids B therein to the total number of the secondary particles is 3 to 95 %.

The area-weighted average aspect ratio of the void A is preferably 1.9 or more, and more preferably 2.0 or more. The area-weighted average aspect ratio of the void A is preferably 4.0 or less, and more preferably 3.5 or less. For example, the area-weighted average aspect ratio of the void A is 1.9 to 4.0, or 2.0 to 3.5.

The presence of secondary particles having internal voids as at least a part of the multiple secondary particles contained in LiMO alleviates the expansion and contraction of LiMO due to the desorption of lithium ions during charging and the insertion of lithium ions during discharging, resulting in stabilization of the crystal structure of LiMO.

Further, the area-weighted average aspect ratio of the voids A being not less than the lower limit value described above means that the cross-section of the voids is relatively oblong. The oblong cross-section of the voids results in deformation of the secondary particles in the short direction of the voids when compressed during battery production, which is likely to increase the density of the secondary particles. Further, when pressure is applied to LiMO during the production of a lithium secondary battery, the cracking directions of the secondary particles tend to become relatively uniform. As a result, a lithium secondary battery with high initial discharge capacity and rate performance is easily obtained.

Furthermore, when the average aspect ratio of the voids A is not more than the upper limit value described above, the expansion and contraction of LiMO during charging and discharging described above is more easily alleviated, and the crystal structure of LiMO is more easily stabilized. As a result, a lithium secondary battery with high initial discharge capacity and rate performance is easily obtained.

The ratio of the number of the secondary particles B to the total number of the secondary particles is preferably 3 to 95 %, more preferably 5 to 95 %, and even more preferably 10 to 95 %. When the ratio of the number of the secondary particles B is not less than the lower limit value of the above range, it is possible to alleviate the expansion and contraction of LiMO due to the desorption of lithium ions during charging and the insertion of lithium ions during discharging, resulting in stabilization of the crystal structure of LiMO. As a result, a lithium secondary battery with high initial discharge capacity and rate performance is easily obtained. When the ratio of the number of the secondary particles B is not more than the upper limit value of the above range, the particle packing density increases, thereby increasing the energy density, which improves the output performances (initial discharge capacity and rate performance) of the battery.

The secondary particles B preferably include secondary particles (hereinafter also referred to as "secondary particles B') in which the average aspect ratio of the voids B in one secondary particle measured by the above-mentioned method is 1.8 to 5.0.

The ratio of the number of the secondary particles B' to the total number of the secondary particles is preferably 8 % or more, more preferably 10 % or more, even more preferably 15 % or more, and particularly preferably 20 % or more. The ratio of the number of the secondary particles B' is preferably 94 % or less, more preferably 93 % or less, and even more preferably 92 % or less. The ratio of the number of the secondary particles B' may be, for example, 8 to 94 %, 10 to 93 %, 15 to 92 %, or 20 to 92 %.

The average value of the equivalent circle diameters of the voids A is preferably 0.3 $\mu$m or more, and more preferably 0.4 $\mu$m or more. The upper limit of the average value of the equivalent circle diameter of the voids A is not particularly limited as long as the effect of the present invention is obtained, but is preferably 10 $\mu$m or less, more preferably 8 $\mu$m or less, and even more preferably 5 $\mu$m or less.

The average value of the equivalent circle diameters of the voids A may be, for example, 0.3 to 10 $\mu$m, 0.3 to 8 $\mu$m, or 0.4 to 5 $\mu$m.

The area-weighted average major axis of the voids A is preferably 0.2 $\mu$m or more, and more preferably 0.3 $\mu$m or more. The area-weighted average major axis of the voids A is preferably 15 $\mu$m or less, more preferably 10 $\mu$m or less, and even more preferably 5.0 $\mu$m or less. The area-weighted average major axis of the voids A may be, for example, 0.2 to 15 $\mu$m, 0.2 to 10 $\mu$m, or 0.3 to 5.0 $\mu$m.

The area-weighted average minor axis of the voids A is preferably 0.1 $\mu$m or more. The area-weighted average minor axis of the voids A is preferably 3.0 $\mu$m or less, more preferably 2.5 $\mu$m or less, and even more preferably 2.0 $\mu$m or less. The area-weighted average minor axis of the voids A may be, for example, 0.1 to 3.0 $\mu$m, 0.1 to 2.5 $\mu$m, or 0.1 to 2.0 $\mu$m.

The voids present in the secondary particles A include three types: voids having an aspect ratio of less than 1.8 (hereinafter also referred to as "voids A1"), voids having an aspect ratio of 1.8 to 5.0 (hereinafter also referred to as "voids A2"), and voids having an aspect ratio of more than 5.0 (hereinafter also referred to as "voids A3").

The ratio of the number of voids A2 to the total number of voids A1 to A3 is preferably 20 % or more, more preferably 30 % or more, and even more preferably 40 % or more. The ratio of the number of voids A2 is preferably 90 % or less, more preferably 80 % or less, and even more preferably 70 % or less. The ratio of the number of voids A2 may be, for example, 20 to 90 %, 30 to 80 %, or 40 to 70 %.

The ratio of the number of voids A1 to the total number of voids A1 to A3 is preferably 10 % or more, more preferably 20 % or more, and even more preferably 30 % or more. The ratio of the number of voids A1 is preferably 80 % or less, more preferably 70 % or less, and even more preferably 60 % or less. The ratio of the number of voids A1 may be, for example, 10 to 80 %, 20 to 70 %, or 30 to 60 %.

The ratio of the number of voids A3 to the total number of voids A1 to A3 is preferably 0 % or more, more preferably 0.3 % or more, and even more preferably 1 % or more. The ratio of the number of voids A3 is preferably 40 % or less, more preferably 30 % or less, and even more preferably 20 % or less. The ratio of the number of voids A3 may be, for example, 0 to 40 %, 0.3 to 30 %, or 1 to 20 %.

The number of the voids A2 can be obtained from the contour shape of the void cross-sections A recognized in the binarized image described above. Specifically, by calculating the aspect ratios of all voids, the number of the voids A2 is obtained as a total number of voids with an aspect ratio of 1.8 to 5.0. The number of the voids A1 and the number of the voids A3 can be likewise obtained.

The area-weighted average aspect ratio of the secondary particles A is preferably 1.0 or more. The area-weighted average aspect ratio of the secondary particles A is preferably 5.0 or less, and more preferably 3.0 or less, and even more preferably 2.5 or less. The area-weighted average aspect ratio of the secondary particles A may be, for example, 1.0 to 5.0, 1.0 to 3.0, or 1.0 to 2.5.

The area-weighted average major axis of the secondary particles A is preferably more than 6.0 $\mu$m. The area-weighted average major axis of the secondary particles A is preferably 20 $\mu$m or less, more preferably 17 $\mu$m or less, and even more preferably 14 $\mu$m or less. The area-weighted average major axis of the secondary particles A may be, for example, more than 6.0 $\mu$m and 20 $\mu$m or less, more than 6.0 $\mu$m and 17 $\mu$m or less, or more than 6.0 $\mu$m and 14 $\mu$m or less.

The area-weighted average minor axis of the secondary particles A is preferably 1 $\mu$m or more, more preferably 2 $\mu$m or more, and even more preferably 4 $\mu$m or more. The area-weighted average minor axis of the secondary particles A is preferably 20 $\mu$m or less, more preferably 16 $\mu$m or less, and even more preferably 12 $\mu$m or less. The area-weighted average minor axis of the secondary particles A may be, for example, 1 to 20 $\mu$m, 2 to 16 $\mu$m, or 4 to 12 $\mu$m.

The ratio of the area-weighted average major axis of the voids A to the area-weighted average major axis of the secondary particles A is preferably 0.001 or more, more preferably 0.005 or more, and even more preferably 0.01 or more. The ratio of the area-weighted average major axis of the voids A is preferably 0.9 or less, more preferably 0.8 or less, and even more preferably 0.7 or less. The ratio of the area-weighted average major axis of the voids A may be, for example, 0.001 to 0.9, 0.005 to 0.8 or 0.01 to 0.7.

The ratio of the area-weighted average minor axis of the voids A to the area-weighted average minor axis of the secondary particles A is preferably 0.01 or more, and more preferably 0.02 or more. The ratio of the area-weighted average minor axis of the voids A is preferably 0.5 or less, more preferably 0.3 or less, and even more preferably 0.2 or less. The ratio of the area-weighted minor axis of the voids A may be, for example, 0.01 to 0.5, 0.01 to 0.3, or 0.02 to 0.2.

The expansion and contraction of LiMO due to the desorption of lithium ions during charging and the insertion of lithium ions during discharging is mitigated and the crystal structure of LiMO stabilizes when at least one of the following is not less than the lower limit value described above: the ratio of the number of the secondary particles B', the average equivalent circle diameter of the voids A, the area-weighted average major axis or minor axis of the voids A, the ratio of the number of the voids A1, A2 or A3, the area-weighted average aspect ratio of the secondary particles A, the area-weighted average major axis and minor axis of the secondary particles A, the ratio of the area-weighted average major axis of the voids A to the area-weighted average major axis of the secondary particles A, and the ratio of the area-weighted average minor axis of the voids A to the area-weighted average minor axis of the secondary particles A. As a result, a lithium secondary battery with high initial discharge capacity and rate performance is easily obtained. The particle packing density increases, thereby increasing the energy density, which improves the output performances (initial discharge capacity and rate performance) of the battery, when at least one of the following is not more than the upper limit value described above: the ratio of the number of the secondary particles B', the average equivalent circle diameter of the voids A, the area-weighted average major axis or minor axis of the voids A, the ratio of the number of the voids A1, A2 or A3, the area-weighted average aspect ratio of the secondary particles A, the area-weighted average major axis and minor axis of the secondary particles A, the ratio of the area-weighted average major axis of the voids A to the area-weighted average major axis of the secondary particles A, and the ratio of the area-weighted average minor axis of the voids A to the area-weighted average minor axis of the secondary particles A.

$D_{50}$ of LiMO is preferably 5 $\mu$m or more, more preferably 7 $\mu$m or more, and even more preferably 9 $\mu$m or more. $D_{50}$ is preferably 20 $\mu$m or less, more preferably 18 $\mu$m or less, and even more preferably 9 $\mu$m or less. $D_{50}$ may be, for example, 5 to 20 $\mu$m, 7 to 18 $\mu$m, or 9 to 16 $\mu$m. When $D_{50}$ is not less than the lower limit value described above, voids can be formed between the particles, and the electrolyte can penetrate into the interior through the voids, thereby suppressing internal resistance and improving battery performances (initial discharge capacity and rate performance). When $D_{50}$ is not more than the upper limit value described above, the size of the voids between the particles can be suppressed to a certain extent, and the particle packing density increases, thereby increasing the energy density and improving the battery output performances (initial discharge capacity and rate performance).

LiMO preferably has a layered structure. The crystal structure of LIMO is preferably a hexagonal crystal structure or a monoclinic crystal structure, and more preferably a layered rock salt structure.

The hexagonal crystal structure belongs to any one of the space groups selected from the group consisting of P3, $P3_1$, $P3_2$, R3, P-3, R-3, P312, P321, P3112, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_1$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mc.

The monoclinic crystal structure belongs to any one of the space groups selected from the group consisting of P2, $P2_1$, C2, Pm, Pc, Cm, Cc, P2/m, P21/m, C2/m, P2/c, $P2_1$/c, and C2/c.

Among the aforementioned crystal structures, for obtaining a lithium secondary battery having high initial discharge capacity, the particularly preferable crystal structure of the cathode active material is a hexagonal crystal structure belonging to R-3m or a monoclinic crystal structure belonging to C2/m.

In the XRD pattern, when the peak area of a diffraction peak existing within the range of 2θ = 18.5 ± 1° is defined as $I_D$ and the peak area of a diffraction peak existing within the range of 2θ = 44.5 ± 1° is defined as $I_E$, $I_D/I_E$ is preferably 0.8 or more, more preferably 0.9 or more, and even more preferably 1.0 or more.

$I_D/I_E$ may be 1.4 or less, 1.3 or less, or 1.2 or less.

$I_D/I_E$ may be, for example, 0.8 to 1.4, 0.9 to 1.3, or 1.0 to 1.2.

<Composition>

LiMO contains Li. LiMO preferably contains Ni. LiMO may further contain at least one element selected from the group consisting of Co and Mn, may contain at least one element M1 selected from the group consisting of Co, Mn, and Al, and may contain at least one element M2 selected from the group consisting of Fe, Cu, Ti, Mg, W, Mo, Nb, Zn, Sn, Zr, Ga, B, Si, S, and P.

The molar percentage of Co relative to the total molar number of elements other than Li and oxygen (e.g., Ni, M1 and M2 described below) contained in LiMO is preferably 5 % or less, more preferably 3 % or less, and even more preferably 1 % or less.

The molar percentage of Co may be 0 %, 0.01 % or more, or 0.1 % or more.

The molar percentage of Co may be, for example, 0 to 5 %, 0 to 3 %, 0 to 1 %, 0.01 to 3 %, or 0.1 to 1 %.

Even when the molar percentage of Co is within the above range, LiMO can provide a lithium secondary battery with high initial discharge capacity and rate performance.

<<Composition formula>>

LiMO is preferably represented by the following composition formula (I):

$$Li[Li_x(Ni_{(1-y-z)}M1_yM2_z)_{1-x}]O_2 \qquad (I),$$

wherein M1 represents at least one element selected from the group consisting of Co, Mn, and Al, and M2 represents at least one element selected from the group consisting of Fe, Cu, Ti, Mg, W, Mo, Nb, Zn, Sn, Zr, Ga, B, Si, S, and P, and the composition formula (I) satisfies $-0.1 \leq x \leq 0.2$, $0 < y < 1$, $0 \leq z \leq 0.2$, and $y + z < 1$.

For obtaining a lithium secondary battery with high cycle performance, x is preferably -0.05 or more, and more preferably 0 or more. For obtaining a lithium secondary battery with higher initial coulombic efficiency, x is preferably 0.15 or less, and more preferably 0.1 or less.

For example, x may be -0.05 to 0.15, 0 to 0.15, or 0 to 0.1.

For obtaining a lithium secondary battery with high output performances (initial discharge capacity and rate performance), y is preferably 0.001 or more, more preferably 0.005 or more, and even more preferably 0.01 or more. For obtaining a lithium secondary battery with high thermal stability, y is preferably 0.5 or less, more preferably 0.3 or less.

For example, y may be 0.001 or more and less than 1, 0.005 to 0.5, or 0 01 to 0.3.

When LiMO contains the element M2, for obtaining a lithium secondary battery with high cycle performance, z is preferably 0.001 or more, more preferably 0.005 or more. For obtaining a lithium secondary battery with high storage stability at high temperatures (e.g., in a 60°C environment), z is preferably 0.08 or less, more preferably 0.07 or less, and even more preferably 0.05 or less.

For example, z may be 0.001 to 0.08, 0.005 to 0.07, or 0.005 to 0.05.

For obtaining a lithium secondary battery with high thermal stability, it is more preferable that the element M2 is at least one element selected from the group consisting of Fe, Mg, W, Zr, Nb, B and Si.

For obtaining a lithium secondary battery with high output performances (initial discharge capacity and rate performance), y + z is preferably 0.001 or more, more preferably 0.005 or more, and even more preferably 0.01 or more. For obtaining a lithium secondary battery with high thermal stability, y + z is preferably 0.5 or less, more preferably 0.3 or less, and even more preferably 0.1 or less.

For example, y + z may be 0.001 or more and less than 1, 0.005 to 0.5, 0.01 to 0.3, or 0.01 to 0.1.

<<Method for producing LiMO>>

The method for producing LiMO includes an MCC production step for producing MCC, a mixing step for mixing the obtained MCC and a lithium compound, and a calcination step for calcining the obtained mixture under an oxygen-containing atmosphere.

<MCC production step>

MCC is a compound containing Ni and an optional element M1, and may contain an element M2, and may be any of a metal composite hydroxide, a metal composite oxide, and a mixture thereof, containing the metal elements in a molar ratio represented by the following formula (I').

$$Ni:M1:M2 = (1-y-z):y:z \qquad (I')$$

In the formula (I'), M1, M2, y, and z are the same as M1, M2, y, and z in the composition formula (I).

The method for producing MCC includes reacting a nickel salt solution, a metal salt solution containing the element M1, a complexing agent, and an alkaline solution. When preparing the metal composite hydroxide, a metal salt solution containing an optional element M2 may be added. In this instance, MCC becomes a metal composite hydroxide. The metal composite hydroxide can be produced by a batch coprecipitation method or a continuous coprecipitation method.

Hereinbelow, a method for producing MCC containing Ni and an element M1 is described as an example. Specifically, a nickel salt solution, a metal salt solution containing an element M1, a complexing agent, and an alkaline solution are reacted by the continuous coprecipitation method described in JP-A-2002-201028 to produce a metal composite hydroxide represented by $Ni_{(1-y)}M1_y(OH)_2$. In this formula, y is the same as in the composition formula (1).

With regard to the nickel salt as a solute of the nickel salt solution, at least one of nickel sulfate, nickel nitrate, nickel chloride, and nickel acetate can be used, for example.

As the metal salt of the element M1, which is a solute of the metal salt solution containing the element M1, for

EP 4 628 451 A1

example, a sulfate, nitrate, chloride, or acetate of the element M1 can be used. Examples thereof include cobalt sulfate, cobalt nitrate, cobalt chloride, cobalt acetate, manganese sulfate, manganese nitrate, manganese chloride, manganese acetate, aluminum sulfate, aluminum nitrate, aluminum chloride, and aluminum acetate.

Likewise, as the metal salt of the element M2, which is a solute of the metal salt solution containing the element M2, for example, a sulfate, nitrate, chloride, or acetate of the element M2 can be used.

The metal salts are used in a ratio that corresponds to the composition ratio of $Ni_{(1-y)}M1_y(OH)_2$. That is, the respective amounts of the metal salts are specified so that the molar ratio of Ni and the element M1 in the mixed raw material solution containing the above metal salts corresponds to (1-y):y in the composition formula. As a solvent, water can be used.

The complexing agent is capable of forming a complex with nickel ions and ions of the element M1 in an aqueous solution. Examples of the complexing agent include ammonium ion donors (e.g., ammonium hydroxide, ammonium sulfate, ammonium chloride, ammonium carbonate, and ammonium fluoride), hydrazine, ethylenediaminetetraacetic acid, nitrilotriacetic acid, uracildiacetic acid, and glycine, of which the ammonium ion donors are preferable.

In the step of producing a metal composite hydroxide, a complexing agent may or may not be used. When a complexing agent is used, the amount of the complexing agent contained in a mixture solution containing the nickel salt solution, the metal salt solution containing the element M1, and the complexing agent is preferably, for example, more than 0.00 and 2.00 % or less, in terms of a molar ratio of the complexing agent to the total molar number of the metal salts (nickel salt and metal salt of the element M1).

In the coprecipitation method, in order to adjust the pH value of the mixture solution, an alkaline solution is added to the mixture solution before the pH of the mixture solution changes from alkaline to neutral. Examples of alkaline solutions include an aqueous solution of an alkali metal hydroxide. Examples of alkali metal hydroxides include sodium hydroxide and potassium hydroxide.

In the context of the present specification, the pH value is defined as a value measured when the temperature of the mixture solution is 40°C. The pH of the mixture solution is measured when the temperature of the mixture solution sampled from the reaction vessel reaches 40°C. When the temperature of the sampled mixture solution is not 40°C, the mixture solution is heated or cooled to 40°C and then the pH is measured.

When the above nickel salt solution, metal salt solution containing the element M1, and complexing agent are continuously supplied to the reaction vessel, Ni and the element M1 react to produce $Ni_{(1-y)}M1_y(OH)_2$.

The reaction temperature is preferably 20 to 80°C, and more preferably 30 to 70°C.

The pH value of the mixture in the reaction vessel is, for example, preferably 9 to 13, and more preferably 11 to 13.

When the reaction temperature and pH value are within the above ranges, MCC with high crystallinity can be obtained. As a result, LiMO of the present embodiment can be obtained through the mixing step and the calcination step. In a lithium secondary battery using such LiMO, the expansion and contraction of LiMO due to the desorption of lithium ions during charging and the insertion of lithium ions during discharging is mitigated, and the crystal structure of LiMO is stabilized. As a result, a lithium secondary battery with high initial discharge capacity and high rate performance can be easily obtained.

The reaction precipitate formed in the reaction vessel is neutralized while stirring. The neutralization time for the reaction precipitate is, for example, 1 to 20 hours.

The stirring is preferably performed while rotating a stirrer having a stirring blade. By stirring, the material in the reaction vessel is properly stirred, and by maintaining the mixed state in the reaction vessel properly, the reaction conditions adjusted as described above are easily reflected in the physical properties of MCC.

With respect to the reaction vessel used in the continuous coprecipitation method, one which allows the overflow for separation of the reaction precipitate can be used.

When producing a metal composite hydroxide by the batch coprecipitation method, the reaction vessel can be a reaction vessel without an overflow pipe, or a device equipped with a concentration tank connected to an overflow pipe, which has a mechanism for concentrating the overflowed reaction precipitate in the concentration tank and circulating it back to the reaction vessel.

Various gases, for example, inert gases such as nitrogen, argon, or carbon dioxide, oxidizing gases such as air or oxygen, or a mixture thereof, may be supplied to the reaction vessel.

After the above reaction, the neutralized reaction precipitate is washed with water and then isolated. For isolation, for example, a method is used in which the slurry containing the reaction precipitate (i.e., the coprecipitate slurry) is dehydrated by centrifugation or suction filtration.

The isolated reaction precipitate is washed, dehydrated, dried, and sieved as necessary to obtain a metal composite hydroxide containing Ni and the element M1.

The reaction precipitate is preferably washed with a washing liquid such as water, weak acid water, or an alkaline washing liquid. In the present embodiment, washing with an alkaline washing liquid is preferable, and washing with an aqueous sodium hydroxide solution or an aqueous potassium hydroxide solution is more preferable. Further, washing may be performed using a washing liquid containing a sulfur element. Examples of the washing liquid containing a sulfur element include an aqueous sulfate solution of potassium or sodium.

It is preferable to wash with a washing liquid with a mass of at least 10 times the mass of the reaction precipitate. The temperature of the washing liquid used is preferably 30°C or higher. Furthermore, when washing is performed in a batchwise manner, it is preferable to perform washing at least twice.

When washed with a liquid other than water, it is preferable to further wash with water to ensure that no compounds derived from the liquid remain in the reaction precipitate.

The drying temperature is preferably 80 to 250°C, and more preferably 90 to 230°C. The drying time is preferably 0.5 to 24 hours, and more preferably 1 to 20 hours. The drying pressure may be normal pressure or reduced pressure.

When producing a metal composite oxide as MCC, a metal composite hydroxide may be heated to form a metal composite oxide. If necessary, multiple heating steps may be performed. The heating temperature in the present specification refers to the set temperature of the heating device. When multiple heating steps are performed, the heating temperature refers to the temperature of the heating step performed at the highest holding temperature among the heating steps.

The heating temperature is preferably 400 to 700°C, and more preferably 450 to 680°C. When the heating temperature is 400 to 700°C, the metal composite hydroxide is sufficiently oxidized, and a metal composite oxide having a BET specific surface area in an appropriate range is obtained.

The time for which the heating temperature is maintained may be 0.1 to 20 hours, and is preferably 0.5 to 10 hours. The heating rate until reaching the heating temperature is, for example, 50 to 400°C/hour. The heating atmosphere may be air, oxygen, nitrogen, argon, or a mixture of these gases.

The inner atmosphere of heating device may be an atmosphere containing a moderate amount of oxygen. The oxygen-containing atmosphere may be a mixed gas atmosphere of an inert gas and an oxidizing gas, or may be an atmosphere in which an oxidizing agent is caused to be present in an inert gas atmosphere. An atmosphere containing a moderate amount of oxygen inside the heating device allows the transition metal contained in the metal composite hydroxide to be oxidized appropriately, which facilitates the control of the form of the metal composite oxide.

With respect to the oxygen or oxidizing agent in the oxygen-containing atmosphere, there is no particular limitation as long as sufficient oxygen atoms can be provided to oxidize the transition metals.

When the oxygen-containing atmosphere is a mixed gas atmosphere of an inert gas and an oxidizing gas, the atmosphere in the heating device can be controlled by, for example, passing an oxidizing gas through the heating device or bubbling an oxidizing gas into the mixture solution.

As the oxidizing agent, peroxides such as hydrogen peroxide, peroxide salts such as permanganates, perchlorates, hypochlorites, nitric acid, halogens, ozone, or the like can be used.

MCC can be produced through the above steps. By adjusting the composition of MCC and the amount of the lithium compound described below, $I_D/I_E$ can be adjusted to fall within the range specified in the present embodiment.

[Mixing step]

MCC produced in the MCC production step described above is mixed with a lithium compound.

The lithium compound may be at least one of lithium carbonate, lithium nitrate, lithium acetate, lithium hydroxide, lithium hydroxide hydrate, lithium oxide, lithium chloride, and lithium fluoride. Among these, any one of lithium hydroxide, lithium hydroxide hydrate, and lithium carbonate, or a mixture thereof, is preferable.

MCC and the lithium compound are mixed in consideration of the composition ratio of the final target product to obtain a mixture of the lithium compound and MCC. The amount (molar ratio as unit rate) of Li relative to the total amount of elements other than oxygen contained in the MCC (e.g., Ni, element M1, element M2) is preferably 0.98 to 1.20, more preferably 0.99 to 1.15, and even more preferably 1.00 to 1.10.

When mixing MCC and a lithium compound, it is preferable to add the lithium compound portionwise to the entire amount of MCC, followed by mixing, or to add MCC portionwise to the entire amount of the lithium compound, followed by mixing. For example, when adding the lithium compound in two portions to the entire amount of MCC, followed by mixing, a portion of the lithium compound is added to and mixed with the entire amount of MCC, and the remaining lithium compound is added to and mixed with the resulting mixture. For example, when adding MCC in two portions to the entire amount of the lithium compound, followed by mixing, a portion of MCC is added to and mixed with the entire amount of the lithium compound, and the remaining MCC is added to and mixed with the resulting mixture.

By implementing portionwise addition of the lithium compound to the entire amount of MCC and subsequent mixing, or portionwise addition of MCC to the entire amount of lithium compound and subsequent mixing, Li can be uniformly dispersed throughout MCC without uneven distribution. As a result, LiMO can be produced in which the area-weighted average aspect ratio of the voids A is within the range specified in the present embodiment, and secondary particles B are included at the ratio specified in the present embodiment.

The number of portions in the portionwise addition is preferably 2 to 8, and more preferably 2 to 6.

When implementing portionwise addition of the lithium compound to the entire amount of MCC and subsequent mixing, the amount of lithium compound added per portion can be appropriately set according to the number of portions. The amount of lithium compound added per portion is, for example, preferably 20 to 50 % of the total amount of the lithium compound added in this mixing step, more preferably 30 to 50 %.

When implementing portionwise addition of MCC to the entire amount of the lithium compound and subsequent mixing, the amount of MCC added per portion can be appropriately set according to the number of portions. The amount of MCC added per portion is, for example, preferably 20 to 50 % of the total amount of MCC added in this mixing step, more preferably 30 to 50 %.

By adjusting the number of portions, the amount of lithium compound added per portion, and so forth, the area-weighted average aspect ratio of the voids A or the secondary particles A, the ratio of the number of the secondary particles B or the secondary particles B', the average equivalent circle diameter of the voids A, the area-weighted average major axis or minor axis of the voids A or the secondary particles A, and the ratios of the numbers of the voids A1 to A3 can be set within the respective ranges of the present embodiment.

Mixing is preferably performed using, for example, a ball mill, a vibration mill, a mixer, a homogenizer, etc., and the mixing time per mixing operation is preferably 1 minute to 20 hours, and more preferably 3 minutes to 12 hours. Portionwise addition of the lithium compound to the MCC and subsequent mixing allow the area-weighted average aspect ratio of the voids A to be easily set within the above-mentioned range.

[Calcination step]

The resulting mixture is calcined in an oxygen-containing atmosphere. Calcination of the mixture allows LiMO crystals to grow.

The calcination temperature in the present specification refers to the temperature of the atmosphere in the calcination device, and means the highest holding temperature (maximum holding temperature).

When the calcination process has multiple calcination stages, the calcination temperature means the highest holding temperature in each calcination stage.

The calcination temperature is preferably 500 to 1000°C, more preferably 600 to 900°C, even more preferably 650 to 850°C, and particularly preferably 650°C to 820°C. When the calcination temperature is equal to or higher than the lower limit value of the above range, LiMO having a solid crystal structure can be obtained. Further, when the calcination temperature is not higher than the upper limit value described above, the volatilization of lithium ions at the surface of LiMO particles can be reduced.

The retention time in the calcination step is preferably 1 to 50 hours, and more preferably 2 to 20 hours. When the retention time in the calcination step is not more than the upper limit value described above, the volatilization of lithium ions is suppressed, and the deterioration of battery performance is suppressed. When the retention time in the calcination step is not less than the lower limit value described above, the development of crystals is promoted, and the deterioration of battery performance is suppressed.

In the calcination step, the heating rate until reaching the maximum holding temperature is preferably 80°C/hour or more, more preferably 100°C/hour or more, and even more preferably 150°C/hour or more. The heating rate until reaching the maximum holding temperature is calculated from the time span between the initiation of heating in the calcination device and the moment of reaching the holding temperature.

The calcination step preferably has a plurality of calcination sub-steps with different calcination temperatures. For example, it is preferable to provide a first calcination sub-step and a second calcination sub-step of calcining at a higher temperature than the first calcination sub-step. Further, the calcination step may include calcination sub-steps with different calcination temperatures and different calcination times.

As the calcination atmosphere, air, oxygen, nitrogen, argon, or a mixture of these gases, etc., can be used depending on the desired composition.

The mixture of MCC and the lithium compound may be calcined in the presence of an inert melting agent. The inert melting agent is added to an extent that the initial capacity of the battery using the resulting LiMO as CAM is not impaired, and may remain in the calcined product. As the inert melting agent, for example, the inert melting agent described in WO2019/177032A1 can be used.

The calcination apparatus used for the calcination is not particularly limited, and may be, for example, either a continuous calcination furnace or a fluidized calcination furnace. Examples of the continuous calcination furnace include a tunnel furnace and a roller hearth kiln. As the fluidized calcination furnace, a rotary kiln can be used.

[Optional step]

(Washing step)

The method may include a washing step in which the calcined product is washed with a washing liquid such as pure water or an alkaline washing liquid.

In relation to the washing step, examples of the method of contacting the calcined product with the washing liquid includes a method of putting the calcined product into the washing liquid and stirring the resulting, and a method of pouring the washing liquid onto the calcined product as shower water. The method of pouring the washing liquid onto the calcined product includes a method of putting the calcined product into the washing liquid, stirring the resulting, and then separating the calcined product from the washing liquid.

The temperature of the washing liquid is preferably 20°C or lower, more preferably 15°C or lower, and even more preferably 10°C or lower. By controlling the temperature of the washing liquid to a temperature which is below the upper limit value described above and does not allow the washing liquid to freeze, excessive elution of lithium ions from the crystal structure of the calcined product into the washing liquid during washing can be suppressed.

It is preferable to use a washing liquid with a mass of at least twice the mass of the calcined product. Further, when washing is performed in a batchwise manner, it is preferable to perform washing at least twice.

When washed with a liquid other than water, it is preferable to further wash with water to ensure that no compounds derived from the liquid remain in the reaction precipitate.

The drying temperature is preferably 80 to 250°C, and more preferably 90 to 230°C. The drying time is preferably 0.5 to 24 hours, and more preferably 1 to 10 hours. The drying pressure may be normal pressure or reduced pressure.

LiMO is obtained by the above production method.

<Lithium secondary battery>

A cathode for a lithium secondary battery suitable for using the above LiMO as CAM is described below. Hereinafter, the cathode for a lithium secondary battery may be referred to as the cathode.

Furthermore, a lithium secondary battery as a suitable use of a cathode is described below.

In an example, a suitable lithium secondary battery when the LiMO is used as CAM includes a cathode and an anode, a separator sandwiched between the cathode and the anode, and an electrolytic solution disposed between the cathode and the anode.

FIG. 2 is a schematic diagram showing an example of a lithium secondary battery. For example, a cylindrical lithium secondary battery 10 is manufactured as described below.

First, as illustrated in the partially enlarged view of FIG. 2, a pair of separators 1 having a strip shape, a strip-shaped cathode 2 having a cathode lead 21 at one end, and a strip-shaped anode 3 having an anode lead 31 at one end are laminated in an order of the separator 1, the cathode 2, the separator 1, and the anode 3, and are wound to obtain an electrode group 4.

The cathode 2, for example, has a cathode active material layer 2a containing CAM and a cathode current collector 2b on one side of which the cathode active material layer 2a is formed. Such a cathode 2 can be produced by first preparing a cathode mix containing CAM, a conductive material, and a binder, and then causing the cathode mix to be supported on one side of the cathode current collector 2b to form the cathode active material layer 2a.

The anode 3, for example, can be an electrode in which an anode mix containing an anode active material (not shown) is supported on an anode current collector, or an electrode formed of an anode active material alone, and can be produced in the same manner as the cathode 2.

Next, the electrode group 4 and an insulator (not shown) are put in a battery can 5, then, the bottom of the can is sealed, an electrolytic solution 6 is impregnated into the electrode group 4, and an electrolyte is disposed between the cathode 2 and the anode 3. Then, the top section of the battery can 5 is sealed using a top insulator 7 and a sealing body 8, whereby the lithium secondary battery 10 can be obtained.

The shape of the electrode group 4 may be, for example, of a columnar shape with its cross-section being round, oval, rectangular, or of a round-cornered rectangular shape, wherein the cross-section is perpendicular to the axis of winding of the electrode group 4.

As the shape of the lithium secondary battery including the aforementioned electrode group 4, it is possible to employ the shapes prescribed by IEC60086, which is the standard of batteries prescribed by the International Electrotechnical Commission (IEC), or JIS C 8500. Examples thereof include a cylindrical shape, an angular shape and the like.

The lithium secondary battery is not limited to the wound construction as described above, and may have a laminated construction obtained by laminating a cathode, a separator, an anode, a separator, and so forth. Examples of the laminated lithium secondary battery include the so-called coin-type battery, button-type battery, and paper-type (or sheet-type) battery.

For the cathode, separator, anode and electrolyte as constituents of the lithium secondary battery, for example, it is possible to employ the configurations, materials and production methods described in paragraphs [0113] to [0140] of WO2022/113904A1.

<All-solid-state lithium secondary battery>

The LiMO described above can be used as CAM for an all-solid-state lithium secondary battery.

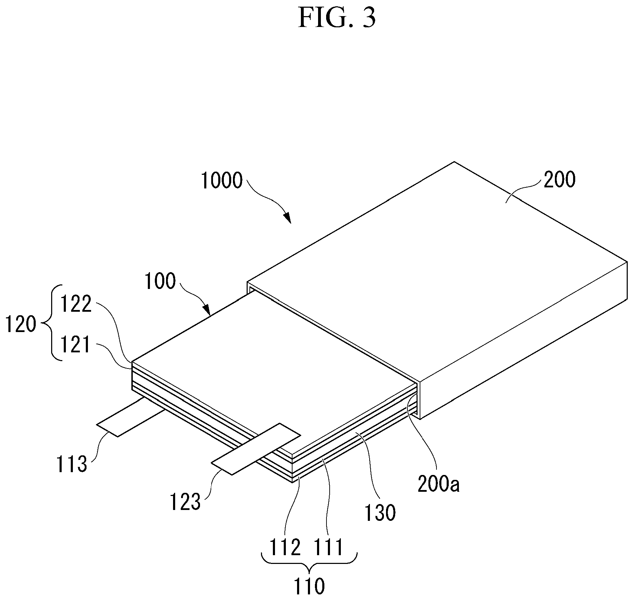

FIG. 3 is a schematic diagram showing an example of an all-solid-state lithium secondary battery. An all-solid-state secondary battery 1,000 shown in FIG. 3 includes a laminate 100 having a cathode 110, an anode 120 and a solid electrolyte layer 130, and an exterior body 200 accommodating the laminate 100. Further, the all-solid-state lithium secondary battery 1,000 may have a bipolar structure in which CAM and an anode active material are arranged on both sides of a current collector. Specific examples of the bipolar structure include structures described in JP-A-2004-95400.

The cathode 110 has a cathode active material layer 111 and a cathode current collector 112. The cathode active material layer 111 contains the CAM described above, and a solid electrolyte. Further, the cathode active material layer 111 may contain a conductive material and a binder.

The anode 120 has an anode active material layer 121 and an anode current collector 122. The anode active material layer 121 includes an anode active material. Further, the anode active material layer 121 may contain a solid electrolyte and a conductive material.

The laminate 100 may have an external terminal 113 connected to a cathode current collector 112 and an external terminal 123 connected to an anode current collector 122. In addition, the all-solid-state lithium secondary battery 1000 may have a separator between the cathode 110 and the anode 120.

The all-solid-state lithium secondary battery 1000 further has an insulator (not shown) that insulates the laminate 100 and the exterior body 200 from each other, and a sealant (not shown) that seals an opening 200a of the exterior body 200.

As the exterior body 200, a container obtained by molding a metal material having high corrosion resistance such as aluminum, stainless steel or nickel-plated steel can be used. In addition, as the exterior body 200, a container obtained by processing a laminate film with at least one surface having been subjected to a corrosion resistant treatment into a bag shape can also be used.

Examples of the shape of the all-solid-state lithium secondary battery 1000 include shapes such as a coin type, a button type, a paper type (or a sheet type), a cylindrical type, a square type, and a laminate type (pouch type).

Although a form of the all-solid-state lithium secondary battery 1000 having one laminate 100 is illustrated as an example, the present embodiment is not limited thereto. The all-solid-state lithium secondary battery 1000 may have a configuration in which the laminate 100 serves as a unit cell and a plurality of unit cells (laminates 100) are sealed inside the exterior body 200.

For the all-solid-state lithium secondary battery, for example, it is possible to employ the configurations, materials and production method described in paragraphs [0141] to [0181] of WO2022/113904A1.

EXAMPLES

Hereinbelow, the present invention will be described in detail with reference to Examples which, however, should not be construed as limiting the present invention.

<Measurement of various parameters>

Measurements of various parameters of LiMO produced by the method described below were performed by the measurement methods described in the above <Area-weighted average aspect ratio of voids, etc.>, <$D_{50}$>, <Composition>, and <XRD pattern>.

<Measurement of initial discharge capacity and rate performance>

The initial discharge capacity and rate performance of the lithium secondary battery were measured by the measurement method described in the above <Initial discharge capacity and rate performance>. When the initial discharge capacity is more than 200 mAh/g, the initial discharge capacity is evaluated as high. When the rate performance is more than 50 mAh/g, the rate performance is evaluated as high.

[Example 1]

After putting water in a reaction vessel equipped with a stirrer and an overflow pipe, an aqueous sodium hydroxide solution was added, and the liquid temperature (reaction temperature) was maintained at 70°C.

An aqueous nickel sulfate solution, an aqueous manganese sulfate solution, and an aqueous aluminum sulfate solution were mixed such that the molar ratio of Ni:Mn:Al was adjusted to 93:3.5:3.5, thereby preparing a raw material mixture solution 1.

Then, the raw material mixture solution 1 and an aqueous ammonium sulfate solution as a complexing agent were continuously added to the reaction vessel with stirring under a nitrogen flow. An aqueous sodium hydroxide solution was added dropwise at appropriate timing such that the pH of the mixture in the reaction vessel became 12 (measurement temperature: 40°C), thereby obtaining a reaction precipitate 1.

The reaction precipitate 1 was washed with sodium hydroxide solution (sodium hydroxide concentration: 5 % by mass) used in a mass that was 20 times the mass of the reaction precipitate 1. After washing, the resulting was dehydrated in a centrifuge, followed by further washing with water, dehydration and drying at 105°C for 20 hours, thereby obtaining a metal composite hydroxide containing Ni, Mn, and Al. The metal composite hydroxide was heated at 650°C for 5 hours to obtain a metal composite oxide MCC1.

Lithium hydroxide monohydrate was weighed out so that the amount of Li (molar ratio) relative to the total amount of Ni, Mn, and Al contained in MCC1 was adjusted to 1.04. Half of the weighed amount of lithium hydroxide monohydrate was added to MCC1, and the resulting was stirred for 5 minutes to obtain a mixture 1A. Thereafter, the remaining half of the amount of lithium hydroxide monohydrate was added to the mixture 1A, and the resulting mixture was stirred for another 5 minutes to obtain a mixture 1.

Next, the obtained mixture 1 was calcined in an oxygen atmosphere at 650°C (heating rate: 300°C/hour) for 5 hours, and then at 750°C (heating rate: 300°C/hour) for 5 hours to obtain a powder 1. The obtained powder 1 was mixed with pure water having its liquid temperature adjusted to 5°C so that the mass ratio of the powder 1 to the total amount was adjusted to 0.3, thereby preparing a slurry. The slurry was stirred for 20 minutes, followed by dehydration, rinsing with purified water which had been adjusted to 5°C and was used in an amount twice the mass of the powder 1, isolation, and drying at 150°C, thereby obtaining LiMO1. LiMO1 had a composition of the formula (I) above, in which $x = 0.04$, $y = 0.07$, $z = 0.00$, and the element M1 was Mn and Al.

Various parameters of LiMO1 are shown in Table 1 (parameters in Examples 2 to 5 and Comparative Examples 1 to 3 below are likewise shown in Table 1).

Using the obtained LiMO1 as CAM, a lithium secondary battery was produced, and the initial discharge capacity and rate performance were measured. The results are shown in Table 1 (the results for Examples 2 to 5 and Comparative Examples 1 to 3 below are likewise shown in Table 1).

[Example 2]

LiMO2 was obtained by following the same procedure as in Example 1, except that lithium hydroxide monohydrate was weighed out such that the pH of the solution in the reaction vessel was adjusted to 11.4 (measurement temperature: 40°C) and the amount (molar ratio) of Li per mole of the total of Ni, Mn, and Al contained in MCC1 (1) was adjusted to 1.02. LiMO2 had a composition of the formula (I) above, in which $x = 0.02$, $y = 0.07$, $z = 0.00$, and the element M1 was Mn and Al.

[Example 3]

A metal composite oxide, MCC3, was obtained by following the same procedure as in Example 1 except that the molar ratio of Ni:Mn:Al was changed to 93:1:6 and the pH of the solution in the reaction vessel was changed to 11.4 (measurement temperature: 40°C). LiMO3 was obtained by following the same procedure as in Example 1 except that lithium hydroxide monohydrate was weighed out so that the amount of Li (molar ratio) relative to the total amount of Ni, Mn, and Al contained in MCC3 was adjusted to 1.03. LiMO3 had a composition of the formula (I) above, in which $x = 0.03$, $y = 0.07$, $z = 0.00$, and the element M1 was Mn and Al.

[Example 4]

A metal composite oxide, MCC4, was obtained by following the same procedure as in Example 1, except that an aqueous nickel sulfate solution, an aqueous cobalt sulfate solution, an aqueous manganese sulfate solution, and an aqueous aluminum sulfate solution were mixed such that the molar ratio of Ni:Co:Mn:Al was adjusted to 92.9:0.1:3.5:3.5. LiMO4 was obtained by following the same procedure as in Example 1 except that lithium hydroxide monohydrate was weighed out so that the amount of Li (molar ratio) relative to the total amount of Ni, co, Mn, and Al contained in MCC4 was adjusted to 1.03. LiMO2 had a composition of the formula (I) above, in which $x = 0.03$, $y = 0.08$, $z = 0.00$, and the element M1 was Co, Mn and Al. The molar percentage of Co relative to the total molar number of elements other than Li and oxygen contained in LiMO4 was 1 %.

[Example 5]

LiMO5 was obtained by following the same procedure as in Example 1 except that lithium hydroxide monohydrate was weighed out so that the amount of Li (molar ratio) relative to the total amount of Ni, Mn, and Al contained in MCC1 was adjusted to 1.05. LiMO5 had a composition of the formula (I) above, in which x = 0.05, y = 0.07, z = 0.00, and the element M1 was Mn and Al.

[Comparative Example 1]

After putting water in a reaction vessel equipped with a stirrer and an overflow pipe, an aqueous sodium hydroxide solution was added, and the liquid temperature (reaction temperature) was maintained at 70°C.

An aqueous nickel sulfate solution, an aqueous cobalt sulfate solution and an aqueous aluminum sulfate solution were mixed together such that the molar ratio of Ni:Co:Al was adjusted to 88:9:3, to thereby prepare a raw material mixture solution 6.

Then, the raw material mixture solution 6 and an aqueous ammonium sulfate solution as a complexing agent were continuously added to the reaction vessel with stirring under a nitrogen flow. An aqueous sodium hydroxide solution was added dropwise at an appropriate timing such that the pH of the mixture solution in the reaction vessel became 11.4 (measurement temperature: 40°C), thereby obtaining a reaction precipitate 6.

The reaction precipitate 6 was washed with sodium hydroxide solution (sodium hydroxide concentration: 5 % by mass) used in a mass that was 20 times the mass of the reaction precipitate 6. After washing, the resulting was dehydrated in a centrifuge, followed by washing with water, dehydration and drying at 105°C for 20 hours, thereby obtaining a metal composite hydroxide containing Ni, Co, and Al. The metal composite hydroxide was heated at 650°C for 5 hours to obtain a metal composite oxide MCC6.

Lithium hydroxide monohydrate was weighed out so that the amount of Li (molar ratio) relative to the total amount of Ni, Co, and Al contained in MCC6 was adjusted to 1.03. Whole of the weighed amount of lithium hydroxide monohydrate was added to MCC6, and the resulting was stirred for 5 minutes to obtain a mixture 6.

Next, the obtained mixture 6 was calcined in an oxygen atmosphere at 650°C (heating rate: 300°C/hour) for 5 hours, and then at 740°C (heating rate: 300°C/hour) for 5 hours to obtain a powder 6. The obtained powder 6 was mixed with pure water having its liquid temperature adjusted to 5°C so that the mass ratio of the powder 6 to the total amount was adjusted to 0.3, thereby preparing a slurry. The slurry was stirred for 20 minutes, followed by dehydration, rinsing with purified water which had been adjusted to 5°C and was used in an amount twice the mass of the powder 6, isolation, and drying at 150°C, thereby obtaining LiMO6. LiMO6 had a composition of the formula (I) above, in which x = 0.03, y = 0.12, z = 0.00, and the element M1 was Co and Al. The molar percentage of Co relative to the total molar number of elements other than Li and oxygen contained in LiMO6 was 9 %.

[Comparative Example 2]

LiMO7 was obtained by following the same procedure as in Example 1 except that lithium hydroxide monohydrate was weighed out so that the amount of Li (molar ratio) relative to the total amount of Ni, Mn, and Al contained in MCC1 was adjusted to 1.03, and the entire amount of lithium hydroxide monohydrate weighed out was added to MCC1, followed by mixing for 5 minutes. In the composition formula (I) of LiMO7, x = 0.03, y = 0.07, z = 0.00, and the element M1 was Mn and Al.

[Comparative Example 3]

A metal composite oxide, MCC8, was obtained by following the same procedure as in Example 1, except that an aqueous nickel sulfate solution, an aqueous cobalt sulfate solution, and an aqueous manganese sulfate solution were mixed such that the molar ratio of Ni:Co:Mn was adjusted to 34:36:30. LiMO8 was obtained by following the same procedure as in Comparative Example 1 except that lithium hydroxide monohydrate was weighed out so that the amount of Li (molar ratio) relative to the total amount of Ni, Mn, and Co contained in MCC8 was adjusted to 1.03. LiMO8 had a composition of the formula (I) above, in which x = 0.03, y = 0.66, z = 0.00, and the element M1 was Mn and Co. The molar percentage of Co relative to the total molar number of elements other than Li and oxygen contained in LiMO8 was 34 %.

Most of the LiMO8 particles were secondary particles having an equivalent circle diameter of 6.0 $\mu$m or less, and when the secondary particles having an equivalent circle diameter of 6.0 $\mu$m or less were excluded, a sufficient number of secondary particles were not available to carry out the measurement method described in <Area-weighted average aspect ratio of voids, etc.>. Therefore, the binarized image was processed and the measurement was carried out in the same manner except that the secondary particles having an equivalent circle diameter of 1.5 $\mu$m or less were excluded instead of the secondary particles having an equivalent circle diameter of 6.0 $\mu$m or less using an image calculation function.

[Table 1]

| | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| LiMO | Area-weighted average aspect ratio of voids A | 2.4 | 2.7 | 2.4 | 2.3 | 2.0 | 1.7 | 2.4 | 1.7 |
| | Ratio of number of secondary particles B [%] | 32.0 | 57.0 | 93.0 | 69.8 | 59.9 | 8.9 | 1.6 | 43.8 |
| | Average value of equivalent circle diameters of voids A [$\mu$m] | 1.8 | 2.9 | 1.5 | 2.3 | 0.4 | 2.1 | 0.3 | 0.9 |
| | (1) Area-weighted average mojor axis of the voids A [$\mu$m] | 2.9 | 4.0 | 1.2 | 2.9 | 0.3 | 2.0 | 0.4 | 1.1 |
| | (2) Area-weighted average short axis of voids A [$\mu$m] | 1.2 | 1.5 | 0.5 | 1.3 | 0.1 | 1.2 | 0.1 | 0.7 |
| | Area-weighted average aspect ratio of secondary particles A [$\mu$m] | 1.3 | 1.4 | 1.4 | 1.4 | 1.2 | 1.3 | 1.2 | 1.4 |
| | (3) Area-weighted average major axis of secondary particles A [$\mu$m] | 8.6 | 8.9 | 10.5 | 7.2 | 9.5 | 8.7 | 10.5 | 1.5 |
| | (4) Area-weighted average minor axis of secondary particles A [$\mu$m] | 6.7 | 6.4 | 7.8 | 5.3 | 7.6 | 6.6 | 8.6 | 1.0 |
| | (1)/(3) | 0.33 | 0.45 | 0.11 | 0.40 | 0.03 | 0.23 | 0.03 | 0.75 |
| | (2)/(4) | 0.18 | 0.23 | 0.06 | 0.24 | 0.02 | 0.19 | 0.02 | 0.65 |
| | Ratio of the number of voids A1 [%] | 43.4 | 33.2 | 40.1 | 44.3 | 49.9 | 71.8 | 33.1 | 76.2 |
| | Ratio of the number of voids A2 [%] | 48.6 | 56.4 | 52.7 | 53.0 | 49.6 | 27.8 | 64.1 | 23.8 |
| | Ratio of the number of voids A3 [%] | 8.0 | 10.4 | 7.2 | 2.7 | 0.5 | 0.4 | 2.8 | 0.0 |
| | $D_{50}$ [$\mu$m] | 14.8 | 16.3 | 13.8 | 11.4 | 13.0 | 13.9 | 16.0 | 3.0 |
| | ID/IE | 1.17 | 1.11 | 1.14 | 1.13 | 1.17 | 1.24 | 1.18 | 1.27 |
| Battery performance | Initial discharge capacity [mAh/g] | 208 | 207 | 203 | 206 | 215 | 184 | 196 | 162 |
| | Rate performance [mAh/g] | 74 | 63 | 58 | 60 | 90 | 50 | 59 | 148 |

It was found that both the initial discharge capacity and the rate performance were high in the case of the lithium secondary batteries manufactured using the LiMO of Examples 1 to 5 as CAM, in which the area-weighted average aspect ratio of the voids A was 1.8 to 5.0 and the ratio of the number of the secondary particles B was 3 to 95 %.

EXPLANATION OF REFERENCE NUMERALS

| | |
|---|---|
| 1 | Separator |
| 2 | Cathode |
| 2a | Cathode active material layer |
| 2b | Cathode current collector |
| 3 | Anode |
| 4 | Electrode group |
| 5 | Battery can |
| 6 | Electrolytic liquid |
| 7 | Top insulator |
| 8 | Sealing body |
| 10 | Lithium secondary battery |
| 21 | Cathode lead |
| 31 | Anode lead |
| 40 | Cross-section of secondary particle |
| 41, 42, 43 | Solid cross-section of secondary particle |
| 44, 45 | Void cross-section |
| 100 | Laminate |
| 110 | Cathode |
| 111 | Cathode active material layer |
| 112 | Cathode current collector |
| 113 | External terminal |
| 120 | Anode |
| 121 | Anode active material layer |
| 122 | Anode current collector |
| 123 | External terminal |
| 130 | Solid electrolyte layer |
| 200 | Exterior body |
| 200a | Opening |
| 1000 | All-solid-state lithium secondary battery |

**Claims**

1.  A lithium metal composite oxide comprising a plurality of secondary particles which are aggregates of primary particles, wherein:

    at least a part of the secondary particles have voids therein,
    with respect to outline shape of the voids exposed in cross-sections of the secondary particles having voids therein, an area-weighted average aspect ratio of the voids with an equivalent circle diameter of 0.2 $\mu$m or more is 1.8 or more and 5.0 or less, and
    a ratio of number of the secondary particles having the voids with an equivalent circle diameter of 0.5 $\mu$m or more to total number of the secondary particles is 3 % or more and 95 % or less.

2.  The lithium metal composite oxide according to claim 1, wherein an average value of equivalent circle diameters of the voids with an equivalent circle diameter of 0.2 $\mu$m or more is 0.3 $\mu$m or more.

3.  The lithium metal composite oxide according to claim 1 or 2, wherein an area-weighted average major axis of the voids with an equivalent circle diameter of 0.2 $\mu$m or more is 0.2 $\mu$m or more and 15 $\mu$m or less.

4.  The lithium metal composite oxide according to claim 1 or 2, wherein the area-weighted average aspect ratio of the voids with an equivalent circle diameter of 0.2 $\mu$m or more is 1.0 or more and 5.0 or less.

5.  The lithium metal composite oxide according to claim 1 or 2, wherein a ratio of an area-weighted average major axis of the voids with an equivalent circle diameter of 0.2 $\mu$m or more to an area-weighted average major axis of the secondary particles having the voids with an equivalent circle diameter of 0.2 $\mu$m or more is 0.001 or more and 0.9 or less.

6. The lithium metal composite oxide according to claim 1 or 2, which has a volumebased 50% cumulative particle size $D_{50}$ of 5 μm or more and 20 μm or less.

7. The lithium metal composite oxide according to claim 1 or 2, which comprises Li and Ni, and optionally comprises at least one element selected from the group consisting of Co and Mn, wherein a molar percentage of Co relative to a total molar number of elements other than Li and oxygen contained in the lithium metal composite oxide is 5 % or less.

8. The lithium metal composite oxide according to claim 1 or 2, which is represented by composition formula (1) below:

$$Li[Li_x(Ni_{(1-y-z)}M1_yM2_z)_{1-x}]O_2 \qquad (I),$$

wherein M1 represents at least one element selected from the group consisting of Co, Mn, and Al; M2 represents at least one element selected from the group consisting of Fe, Cu, Ti, Mg, W, Mo, Nb, Zn, Sn, Zr, Ga, B, Si, S, and P; and the composition formula (I) satisfies $-0.1 \leq x \leq 0.2$, $0 < y < 1$, $0 \leq z \leq 0.2$, and $y + z < 1$.

9. The lithium metal composite oxide according to claim 1 or 2, wherein, in a powder X-ray diffraction measurement using CuKα radiation, $I_D/I_E$ is 0.8 or more, wherein $I_D$ is a peak area of a diffraction peak present in a range of $2\theta = 18.5 \pm 1°$, and $I_E$ is a peak area of a diffraction peak present in a range of $2\theta = 44.5 \pm 1°$.

10. A lithium secondary battery cathode active material, comprising the lithium metal composite oxide of claim 1 or 2.

11. A lithium secondary battery cathode, comprising the lithium secondary battery cathode active material of claim 10.

12. A lithium secondary battery, comprising the lithium secondary battery cathode of claim 11.

# FIG. 1

# FIG. 2

# FIG. 3

## INTERNATIONAL SEARCH REPORT

| International application No. |
|---|
| **PCT/JP2023/043152** |

### A. CLASSIFICATION OF SUBJECT MATTER

*C01G 53/00*(2006.01)i; *H01M 4/505*(2010.01)i; *H01M 4/525*(2010.01)i
FI: C01G53/00 A; H01M4/505; H01M4/525

According to International Patent Classification (IPC) or to both national classification and IPC

### B. FIELDS SEARCHED

Minimum documentation searched (classification system followed by classification symbols)

C01G53/00; H01M4/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-150409 A (TDK CORPORATION) 07 October 2022 (2022-10-07) entire text | 1-12 |
| A | JP 2015-185401 A (KABUSHIKI KAISHA TOYOTA JIDOSHOKKI) 22 October 2015 (2015-10-22) entire text | 1-12 |
| A | JP 2019-096406 A (SUMITOMO CHEMICAL COMPANY, LIMITED) 20 June 2019 (2019-06-20) entire text | 1-12 |
| A | JP 2021-120937 A (SUMITOMO METAL MINING CO., LTD.) 19 August 2021 (2021-08-19) entire text | 1-12 |
| A | WO 2022/169271 A1 (LG CHEM, LTD.) 11 August 2022 (2022-08-11) entire text | 1-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/043152**

| Patent document cited in search report | | | Publication date (day/month/year) | Patent family member(s) | | | Publication date (day/month/year) |
|---|---|---|---|---|---|---|---|
| JP | 2022-150409 | A | 07 October 2022 | US<br>entire text<br>CN | 2022/0311008<br><br>115133015 | A1<br><br>A | |
| JP | 2015-185401 | A | 22 October 2015 | (Family: none) | | | |
| JP | 2019-096406 | A | 20 June 2019 | US<br>entire text<br>JP<br>WO<br>EP<br>KR<br>CN | 2020/0274158<br><br>6495997<br>2019/098384<br>3678235<br>10-2020-0027978<br>111133617 | A1<br><br>B1<br>A1<br>A1<br>A<br>A | |
| JP | 2021-120937 | A | 19 August 2021 | (Family: none) | | | |
| WO | 2022/169271 | A1 | 11 August 2022 | EP<br>KR<br>CN | 4246628<br>10-2022-0113201<br>116569359 | A1<br>A<br>A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022193520 A
- JP 2017004635 A
- JP 2002201028 A

- WO 2019177032 A1
- WO 2022113904 A1
- JP 2004095400 A